(19) Europäisches Patentamt
European Patent Office
Office européen des brevets

(11) **EP 3 421 967 B1**

(12) **EUROPEAN PATENT SPECIFICATION**

(45) Date of publication and mention
of the grant of the patent:
**01.09.2021 Bulletin 2021/35**

(51) Int Cl.:
***G01N 11/04*** *(2006.01)*    *G01N 13/02* *(2006.01)*

(21) Application number: **18177715.2**

(22) Date of filing: **14.06.2018**

(54) **CAPILLARY VISCOMETER AND METHOD FOR ANALYSIS OF FLUIDS, IN PARTICULAR OILS**

KAPILLARVISKOMETER UND VERFAHREN ZUR ANALYSE VON FLÜSSIGKEITEN, INSBESONDERE VON ÖLEN

VISCOMETRE CAPILLAIRE ET PROCEDE D'ANALYSE DE FLUIDES, EN PARTICULIER D'HUILES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.06.2017 IT 201700071008**

(43) Date of publication of application:
**02.01.2019 Bulletin 2019/01**

(73) Proprietors:
• **Consiglio Nazionale Delle Ricerche**
**00185 Roma (IT)**
• **Politecnico di Milano**
**20133 Milano (IT)**

(72) Inventors:
• **Arima, Valentina**
**I-73100 Lecce (IT)**
• **Viola, Ilenia**
**I-00185 Roma (IT)**
• **Bianco, Monica**
**I-73100 Lecce (IT)**
• **Gigli, Giuseppe**
**I-73100 Lecce (IT)**
• **Zizzari, Alessandra**
**I-73100 Lecce (IT)**
• **Metrangolo, Pierangelo**
**I-20131 MILANO (IT)**
• **Gazzera, Lara**
**I-24050 Zanica (BG) (IT)**

(74) Representative: **Perronace, Andrea et al**
**Jacobacci & Partners S.p.A.**
**Via Tomacelli, 146**
**00186 Roma (IT)**

(56) References cited:
**CN-U- 204 462 012      JP-A- 2011 039 002**
**US-A1- 2016 305 864**

• **FISHER L R ET AL: "An experimental study of the washburn equation for liquid flow in very fine capillaries", JOURNAL OF COLLOID AND INTERFACE SCIENCE, ACADEMIC PRESS,INC, US, vol. 69, no. 3, 1 May 1979 (1979-05-01), pages 486-492, XP024187408, ISSN: 0021-9797, DOI: 10.1016/0021-9797(79)90138-3 [retrieved on 1979-05-01]**
• **EVANGELIA ROUMPEA ET AL: "Experimental investigations of non-Newtonian/Newtonian liquid-liquid flows in microchannels", AI CH E JOURNAL, vol. 63, no. 8, 27 March 2017 (2017-03-27), pages 3599-3609, XP055443755, US ISSN: 0001-1541, DOI: 10.1002/aic.15704**
• **Patrick Henning: ". Traditional Viscometer Theory and Design SPECTROVISC Q3000 SERIES VISCOMETER - A PORTABLE KINEMATIC OIL ANALYSIS SOLUTION FOR FIELD-BASED USERS", , 1 January 2014 (2014-01-01), XP055443739, Retrieved from the Internet: URL:https://www.spectrosci.com/product/pvisc-q3000/?fileID=5124bffa44ba961401452d59646a281a [retrieved on 2018-01-23]**

## Description

The present invention relates to a capillary viscosimeter and a method for analysis of fluids, in particular oils.

More precisely, the present invention relates to a cost-efficient, portable and disposable device for monitoring the quality of oil "on-field" and represents a valuable alternative to expensive and less quick traditional systems. We believe that the herein described viscosimeter can be useful for monitoring the quality of cooking oils used in restaurants and public places wherein frying oils are repeatedly used, or when it is necessary to check and validate the oil excellence following the suspected addition of lower quality oils. In addition to the food sector, the invention can be applied in industrial plants for monitoring viscosity variations following chemical/physical treatments (as for instance for assessing the efficiency of regeneration processes).

## State of the art

Viscosity is a particularly relevant parameter for oils, differing significantly in edible vegetable oils according to the type (sunflower, olive, corn, etcetera), the growing area (from which the oil composition depends) [Eur J. Lipid Sci. Technol. 2011, 113, 1019-1025], and the mechanical/physical treatments (for instance for industrial purposes before placing them on the market), or use for food applications (e.g. for frying) [J. Food Eng. 105 (2011) 169-179].

Traditional rheometric apparatuses on a laboratory scale allow to extract viscosity values out of oil samples by measuring the properties of the fluids using torsional motors and torque transducers implying shear and elongation forces. Usually, they need millilitre-sized samples and they are not suitable for the "on-field use" (on-line monitoring of an industrial process, quality control of oils in restaurants, etcetera). For these applications, device miniaturization is needed, however as it is difficult to compact the typical mechanical systems of mass rheology, new approaches based on microfluidic technology are presently being studied. Flow measurements in microchannels provide an estimation of the fluid viscosity due to the high sensitivity to the interface conditions.

In literature, they are mainly reported emulsion-based microfluidic viscosimeters [Lab Chip 2013, 13, 297-301] as well as single-step systems based on capillary flow, stagnation point flow, or contraction geometries [C. J. Tubo and G. H. McKinley, Mech. Res. Commun., 2009, 36, 110-120]. Less usual approaches estimate the local rheological response of nanoparticles (Waigh, 2005; Larson, 2007), single polymers (Shaqfeh 2005), and liquid crystals (Choi et al, 2004; Shojaei-Zadeh and Anna, 2006).

For example, within the framework of microscale emulsion rheometers, a viscosimeter based on drops of few nanolitres (for example, water-in-oil) working without additive has recently been reported [Lab Chip 2013, 13, 297-301]. The assessment of the flow rate of a confined volume of a liquid to which a pressure is applied for passing through a channel restriction, allowed to measure samples with a viscosity of 101 mPa*s, with the limitation for samples with a viscosity higher than that of the oily phase.

The main viscosimeters characteristics and limitations have been examined in C. J. Pipe and G. H. McKinley [Mech. Res. Commun., 2009, 36, 110-120]. Among the single-step microfluidic viscosimeters, capillary pressure rheometers are the simplest, most cost-effective and easiest to manufacture. In the past the experimental reconstruction of the capillary dynamics was tested for organic solvents [Microfluid Nanofluid. 13, 399-409 (2012)], viscoelastic liquids [Anal. Chem. 77(2), 591-595 (2005)], microcapsules [Lab Chip, 14, 4391-4397 (2014), Chem. Eur. J. 20, 1-6 (2014)] and water [Appl. Surf. Sci. 258, 8032-8039 (2012)], in PDMS micro-channels without or with coatings. In such confined systems, the capillary dynamics is strongly influenced by fluid viscosity ($\eta$), by wettability of the inner walls and by the chemical interactions at the liquid/solid interface.

Patent application US2016/305864 discloses the determination of the dynamic viscosity of a fluid by monitoring and measuring the flow rate of the fluid through a micro-channel by using a smart-phone camera.

In patent CN204462012U, "Determination of the purity of an oil with an instrument equipped with a PDMS microfluidic channel", a PDMS device interfaced with an optical set-up was implemented for determining the purity of olive oil on the basis of the refractive index and of the reflectivity variations.

Patent CN204462012U relates more in detail to a method for determining the purity of olive oil, assessing whether it is doped with less expensive oils, increasing the refraction index and decreasing the reflectivity. This is possible as the majority of cheap oils has a lower refraction index than the olive oil one. A neat olive oil sample is used as reference in the measurements.

The Inventors implemented a prototype having a sensitivity of 0,00704dB/% which is sufficient for determining even 1% contamination in olive oil. However, the measurements do not report any assessment of the specific error of each measurement.

The arrangement consists in a device based on PDMS interfaced with an optical system composed of a light source, two optical fibers (an inlet one and an outlet one), a 3dB coupler, a long period fiber grating refractive index, an optical power-meter, a PDMS microchannel, connections, injection pumps and a tank.

In such a system, the PDMS microchannel serves as a micro-container, thanks to the optical transparency necessary for measurements. It has a substantially passive role. Authors wash the device with isopropanol after each measuring and use it again. The sample flows into the chip by means of injection pumps, with external power supply.

The Authors carried out a measuring at room temperature but without assessing the local temperature increase caused by the laser beam. The temperature control is an important parameter which significantly affects the determined specific refractive index value.

The device and method of CN204462012U is also expensive, complex (optical set up to be aligned, external power supply for pumping the liquid etcetera), and apt to cross-contamination (the measurement set-up not being permanent, and the microchannel being reusable).

## Purpose and object of the invention.

The purpose of the present invention is to provide a viscosimeter for fluids solving the problems and overcoming the drawbacks of the prior art. It is a subject-matter of the present invention a viscosimeter for fluids according to the appended claims.

## Detailed description of embodiments of the invention

### List of figures

The invention shall be now described for exemplary but not limiting purposes, referring in particular to the drawing of the appended figures, wherein:

- figure 1 shows the diagram of an indicative chip used in the invention, wherein a= 20 microns and b=150 microns represent the microchannel depth and width; figure 1b explains the correspondence with the parameters measured in step 3 i.e. $\cos\theta$ and surface tension of the liquid $\gamma$:
- figure 2 shows a trend of capillary dynamics for commercial extra-virgin olive oil (EVOc, curve with the square markers), sunflower-seed oil (SFO, dotted curve), a 1:1 mixture of EVOc and SFO (MIXh, curve with the triangle markers): a) distance curves z towards time $t$ and b) $\eta$ curve as a function of the distance z;
- figure 3(a) shows a fit of the curve with the square markers shown in Figure 2b) and referred to EVOc;
- figure 3(b) shows a fit of the dotted curve shown in Figure 2b) and referred to SFO; and

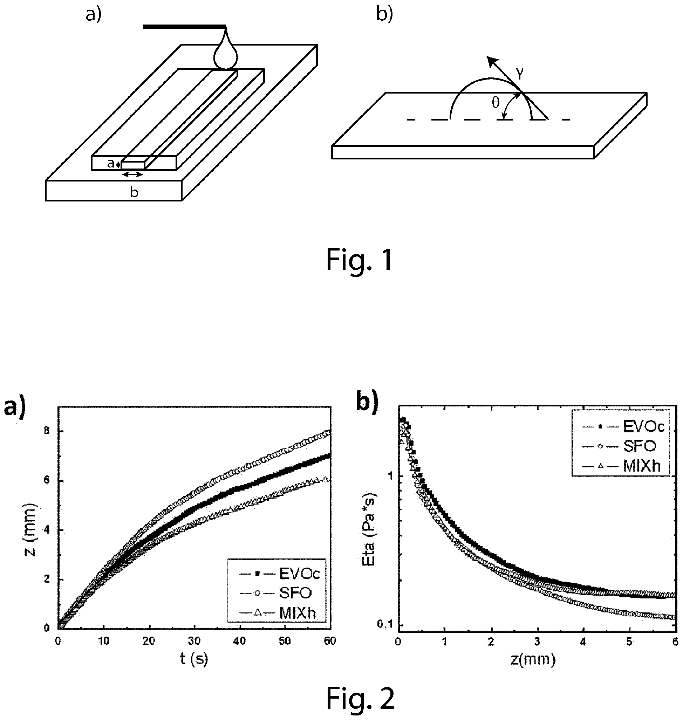

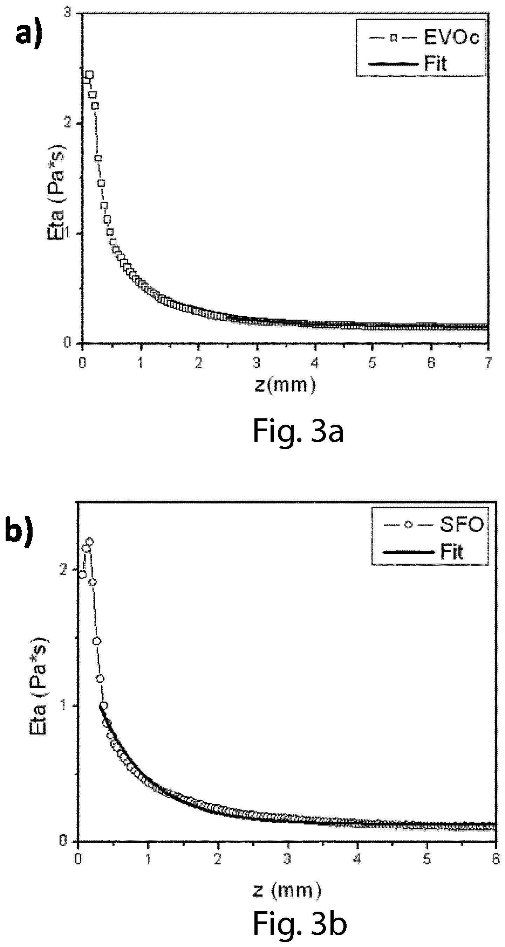

- figure 3(a) shows a fit of the curve with triangle markers shown in Figure 2b) and referred to MIXh;

It is herein specified that elements of different embodiments may be combined to provide further embodiments, without limitation, complying with the technical concept of the invention, as the average expert in the field clearly understands from what described.

The present description also refers to the known art regarding its implementation, the not described detail characteristics, such as for example less important elements usually used in the known art in solutions of the same type.

When an element is introduced it always means that it can be "at least one" or "one or more". When a list of elements or characteristics is listed in this description it means that the subject-matter according to the invention "includes" or alternatively "is composed of "such elements.

### Embodiments

Oils are liquids that adsorb on various surfaces; thus, the study of their capillary dynamics in order to extract the $\eta$ values must be performed in oil-repellent microchannels.

More generally, in case of viscosity analysis of any fluid, the microchannel coating must be adapted each time for flowing the fluid being examined without any absorption occurring . For example, in case of oils it is necessary to have oil-repellent coatings.

It is worth specifying that kinematic viscosity is given by: $\upsilon=\eta/\rho$ where $\eta$ is the dynamic viscosity and $\rho$ is the density of the liquid. The density of the liquid as well as viscosity depend on boundary parameters, such as temperature and pressure. A conventional capillary viscosimeter is calibrated for measuring newtonian liquid viscosity. The lab-on-chip system proposed in this invention does not have this kind of constraints but can be extended to all types of liquids. On the basis of the experience of the inventors in developing fluorinated coatings [Viola et al. J. Fluor. Chem. 128(10), 1335-1339 (2007); Arima et al. Thin Solid Films 520, 2293-2300 (2012), Gazzera et al. Adv. Mater. Interfaces 2, 1500170 (2015)]] and on recent studies on olephobic properties of some of them [L. Gazzera et al. Adv. Mater. Interfaces 2, 1500170 (2015)], in this invention capillary dynamics is used to distinguish between different species of vegetable oils, and to separate oils from mixtures, thanks to a dependence of the flow mobility on the $\eta$ parameter and on the strong interactions at the solid/liquid interface.

The invention consists in implementing a cheap, disposable (possibly portable) device for monitoring the oil quality and the composition thereof.

Five main steps can be identified:

1) manufacturing of microchannels:

2) functionalization of the microchannels;

3) contact angle measurements for assessing the device surface tension and surface wettability, by a "pendant drop" approach (procedure detailed at "step three");

4) flow speed measurement of a generic fluid in a capillary dynamic regime, obtained by recording the displacement coordinate of the flow front over time (procedure detailed at "step four"); and

5) data processing and derivation of the dynamic viscosity of the analyzed fluids. The analysis are, for exemplary purposes, carried out on neat and in-mixture extra-virgin olive oil and sunflower-seed oil, but they can be extended to other types of oils. In particular, measurement at point 4) was carried out with commercial extra-virgin olive oil (EVOc) and sunflower-seed oil (SFO), and also with a 1:1 mixture EVOc/SFO (MIXh). The general form of the microchannel of step 1 is illustrated in figure 1(a), wherein *a, b* are the channel height and width. The device is placed below an optical microscope provided with a camera and connected to a computer. The camera and a software installed on the pc allow to view the fluid front and record its position as a function of time during motion within the microchannel.

Ultimately the functionality of the proposed capillary viscosimeter, based on microfluidic lab-on-chip , must refer to the implementation of a capillary regime, guaranteed by the evidence of a laminar motion of the fluids being studied. Such conditions, in the case of fluids with newtonian behaviour, are generally guaranteed by a sub-millimetric (< 1mm) surface-volume ratio of microchannels (that can otherwise be represented by the hydraulic radius) in particular for various applications below 500 microns, even below 300 microns for others, according to the structural and chemical/physical parameters of the liquid used.

*Example of step 1 (microchannel manufacturing)*

A Polydimethylsiloxane (PDMS) linear microchannel was manufactured having 1 cm nominal length, 20 micron depth and 150 micron width using a soft lithography approach proving the PDMS copy of a photoresist (based on SU-8) mould reproducing the negative of the channel. The manufacturing procedure is similar to industrial moulding however on a micron to millimeter scale. Soon after polymerization, the copy structured with the channel was detached from the mould; 1.5 mm diameter inlet and outlet holes were created on the copy which was later put in suitable contact with a PDMS plane layer manufactured by polymerizing PDMS in a normal laboratory Petri dish not containing microstructures. Both surfaces were activated by means of plasma treatment of oxygen and sealed in oven at 200°C.

However, it should not be understood that PDMS is the only material usable by the invention. As a matter of fact, in all the examples and in the general formulation of the invention any material can be used, even plastic or metal or mixed or composite, that can be structured according to the microscale. For example, polymeric materials (as COC, PEEK, PMMA, PTFE...) and not (glass, silica, ...) can be used to produce microchannels. The preferred choice is PDMS as it is cheap and as it can be easily structured at the microscale.

*Example of step 2 (oleophobic coating)*

Soon after the preparation, the device was connected to small tubes made of plastic (1/16 of external diameter, IDEX-HS; they are small pipes connecting the device to syringe micropumps; all this is necessary to deposit in a controlled way in oleophobic coating. Idex-Hs is a company that manufactures them) and filled with a solution containing hydrophobin (HFBII, 0.1 mg/ml) at a constant speed of 10 $\mu$l/min with syringe pumps. After complete filling, the liquid was incubated for 30 minutes. Then the proteic solution was removed at a rate of 100 $\mu$l/min and the washing was performed with a buffer solution at 20 $\mu$l/min. Finally, after removing the buffer, a fluoropolymer solution (F10, 0.1% v/v) was injected to obtain the inner coating of the microchannel walls. In general, in the invention, coatings other than F10 can be used. For example in literature they are reported oleophobic coatings on plastic material based on perfluoroalkyl ethyl acrylate (S. Ozbay et al. Colloid. Surface A 481, 537-546 (2015)), based on polymer mixtures as PSS, FEP, PEEK (H. Wang et al. J Polym Res 23, 137 (2016), D. Gao et al. Prog. Org. Coat. 82, 74-80 (2015)), of perfluorinated graphene oxides (T. Bharathidasan et al. Carbon 84, 207-213 (2015)), or PDMS microstructurings coated with fluorosilanes (Z. Pan et al. Appl. Surf. Sci. 324, 612-620 (2015)).

*Example of step 3 (parameter measurements)*

"Pendant drop" measurements and contact angle θ measurements were performed on PDMS functionalized with HFBII and F10 for EVOc, SFO (therefore a piece of material functionalized as the channel according to the invention should be) and for a 1:1 mixture MIXh of the two oils in order to extrapolate from the software CAM200 (KSV Instruments Ltd), the surface tension values γ and the wettability parameters (cosθ) to be inserted into the equation for processing data (step 5). Figure 1b shows what such parameters refer to.

*Example of step 4*

The microchannel PDMS inlet and outlet were opened with a blade to obtain the device adapted for the capillary dynamics analysis and the consequent derivation of the dynamic viscosity values. Experiments with the capillary viscosimeter were carried out with optical microscope Nikon (Nikon Eclipse Ti), interfaced with a CCD camera, and on which a software developed in laboratory for detecting the displacements as a function of time was implemented. Capillary dynamic studies on standard oils were carried out depositing a drop (200 μl) of EVOc, SFP and a 1:1 mixture of EVOc/SFP (MIXh) at the inlet of the microchannels of two respective identical chips. Soon after the deposition, the drop flows by capillary action inside the device; the software allows to reconstruct the capillary dynamics acquiring the fluid front position along the channel length as a function of time. The obtained graph shows the position coordinate (mm) with respect to time (s) (see figure 2a).

*Example of step 5.*

The curves shown in figure 2a were reprocessed in Figure 2b, considering the dependence of the capillary flow on the dynamic viscosity η, after inserting data related to wettability and surface tension (step 3).

Curve reprocessing is performed starting from a capillary dynamics law of Washburn type:

$$z(t) = \{(R_H^2 \ \gamma/4\eta)[(2 \ \cos\theta/a) + (2 \ \cos\theta/b)]\}^{1/2} \ t^{1/2}$$

where:

$R_H$ is the hydraulic radius equal to (b*a)/(b+2a) (see Figure 1)
γ is the surface tension at the liquid-gas interface
θ is the contact angle with the surface
η is the liquid dynamic viscosity
a, b are the channel height and width (see Figure 1)

Dynamic viscosity is the resistance of a fluid to flowing and represents a momentum exchange coefficient. It is often called dynamic viscosity to distinguish it from kinematic viscosity, which is a magnitude similar to dynamic viscosity, however it is dimensionally different. Viscosity is dimensionally expressed by a force on a surface over a time lapse, that is, by a pressure over a time lapse and, in terms of fundament magnitudes, by $M \cdot L^{-1} \cdot T^{-1}$ (mass divided by length and time). Dynamic viscosity is measured in the International System in poiseuille and in the cgs system in poise and are valid the equivalences :[1 Pa s = 1 Pl].

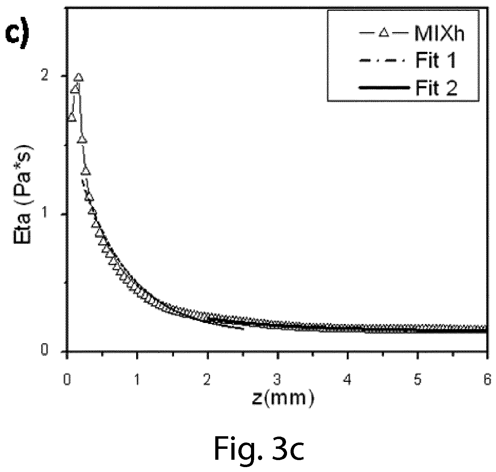

Fit results provide the dynamic viscosity values extrapolated from the measurings and fittings (Step 3 and 5); they are summarized in Figure 3 and in Table 1, where for each type of examined oil, they are reported: contact angle values θ with the PDMS surface coated with HFBII/F10 and the surface tension values γ (as described in step 3), and the viscosity values η as results from the fits shown in figure 3 (η calculated from micro-fluidics defined as ηm) with respect to standard values (ηs at 20°C) calculated by a standard rheometer. Xm and Xs ratios between $\eta_m/\eta_m$EVOc and between $\eta_s/\eta_s$EVOc are also reported.

Table 1.

| Sample | θ | y (mM/m) | $\eta_m$ (Pa*s) | Ratio Xm ($\eta_m/\eta_m$EVOc) | $\eta_s$ (Pa*s) @ 20°C | Ratio Xs ($\eta_s/\eta_s$EVOc) |
|---|---|---|---|---|---|---|
| EVOc | 67.75±0.76 | 32.83±0.31 | 0.153 ± 4.7E-4 | 1.00 ± 0.01 | 0.080 | 1.00 |

(continued)

| Sample | θ | y (mM/m) | $\eta_m$ (Pa*s) | Ratio Xm ($\eta_m$/ $\eta_m$EVOc) | $\eta_s$ (Pa*s) @ 20°C | Ratio Xs ($\eta_s$/ $\eta_s$EVOc) |
|---|---|---|---|---|---|---|
| SFO | 63.89±0.39 | 31.37±0.40 | 0.133 ± 3.7E-3 | 0.87 ± 0.03 | 0.070 | 0.88 |
| MIXh | 64.80±1.70 | 32.10±0.36 | 0.123 ± 1.4E-2 (I) 0.153 ± 5.6E-4 (II) | 0.80 ± 0.09 (I) 1.00 ± 0.01 (II) | 0.070 | 0.88 |

The measured viscosity represents the plateau value reached during the flow. While a single value can be identified for EVOc and SFO, on the contrary two values were found for MIXh. This is due to the fact that the functionalized micro-channel as described at "Step 2" acts as a chromatography column and separates the two mixture components during the flow due to their differences in η. As a consequence, the dynamic viscosity of the mixture shows two regimes and two viscosity values are extracted after data reprocessing. This is an important result considering that the viscosity values calculated using a standard rheometer can be compared for a neat sunflower-seed oil and for the same oil in the 1:1 mixture with olive oil.

We highlight the fact that the dynamic viscosity of a liquid in a microfluidic system, considered as the macroscopic expression of the liquid molecule stretching, is highly influenced by confinement and by the instant variation of all the structural and temperature parameters. It is further demonstrated that viscosity in a microchannel is characterized by a further extensional viscosity component due to the inner high pressure under confinement. Consequently, even though the calculated absolute values ($\eta$m) are different from neat EVOc and SFO values extracted by standard rheometers ($\eta$s), the trend is similar (see values Xm and Xs, which represent the ratio between microfluidic $\eta_m$/$\eta_m$EVOc and between $\eta_s$/$\eta_s$EVOc for standard measurements, reported in Table 1 for comparison).

**Novelties and advantages with respect to the known art.**

The invention shows some substantial peculiarities with respect to the known art which can be summarized non comprehensively as follows. As common capillary viscosimeters have a geometry that uses gravity acceleration to obtain the measurement, they allow to determine the kinematic viscosity parameter (that is the ratio between the dynamic viscosity of a fluid and its density). Furthermore, their use is indicated only for newtonian liquids.

On the contrary the capillary viscosimeter herein proposed allows to measure directly the dynamic viscosity parameter of an oil. The direct detection of the dynamic viscosity allows a more correct assessment of the chemical-physical characteristics of an oil or of a mixture, as it is independent from the fluid density, and makes it possible to compare mixtures whose density is not known. Furthermore, as already demonstrated, the chip according to the invention acts also as a system able to separate mixtures of oils with different viscosity. Finally, the aforesaid chip can be used for a wide variety of newtonian liquids and not. As far as inventors know, there is not a similar commercially available system as regards ease of use, efficiency and cost-effectiveness and enabling to separate mixtures acting as chromatography column.

As regard the aforementioned article "Lara Gazzera, Claudio Corti, Lisa Pirrie, Arja Paananen, Alessandro Monfredini, Gabriella Cavallo, Simona Bettini, Gabriele Giancane, Ludovico Valli, Markus B. Linder, Giuseppe Resnati, Roberto Milani, and Pierangelo Metrangolo Adv. Mater. Interfaces 2015, 2, 1500170" it should be specified the following.

The present description does not relate to the implementation of micro fluidic PDMS devices integrating the coating (already described in the published text) to guarantee oils flowing and not being adsorbed, but rather the identification of neat or in-mixture oily matrices through the examination of chemical-physical parameters (viscosity in particular) in a cheap and potentially portable micro-fluidic device. In principle the device works even independently from the coating. It is in fact possible to follow a capillary dynamics of the different oils also in a device manufactured exclusively in PDMS. In this case, the only difference is that the dynamics is interrupted at an early stage, due to the absorption by PDMS walls, depriving data analysis from the final regime of dynamics, which is functional to determine correctly the viscosity parameter.

Vice versa, in the device with coating, on top of confirming a purely capillary dynamics of oils (though it was predictable on the basis of the preceding studies given the lack of absorption phenomena related to the presence of coating), the preferential interaction of some oils contained inside mixtures with the walls of the device with coating and the completely different dynamic behaviour result to be very innovative and surprising. This clearly indicates that the device acts as a microfluidic chromatography column, thus determining different and interpolated dynamic viscosity trends with respect to the channel length (or the flowing time lapse) to extract the viscosities of oils inside mixtures.

The proposed device falls within the category of new generation lab-on-chip devices of the not-biomedical type. As it is based on the measurement of the dynamic viscosity parameter, as regards the authorizations for placing it into the market, we could think that reference can be made to international rules and standards, which the certified capillary viscosimeters are subjected to (http://www.cncosrl.com/download/brochure/poulten/Viscosi metri_2015.pdf).

In the system according to the invention, the type of oil injected in the device is determined by the calculation of the dynamic viscosity parameter from capillary dynamic curves.

Different oils viscosity can be measured, without using a reference using small volumes of sample (few microlitres). The oil identification is due to the comparison with the preset reference values.

The chip according to the invention is also able to separate mixtures of two oils, acting as a flow chromatography column. In such a case, two distinct values of dynamic viscosity can be extrapolated. This allows to identify the two components of the mixture.

The invention setup is composed of a PDMS microchannel interfaced to an optical microscope and a PC for data analysis and processing. The microscope and pc may be further miniaturized using the high-resolution camera of a cell phone whereon the data analysis software is installed.

The PDMS (or other material) microchannel is internally coated with an oleophobic coating reducing the oil absorption during the measuring and allows to better study the capillary dynamics for determining the viscosity parameter with high precision also in mixtures. In the chip according to the invention, viscosity measuring is determined in Pa*s with an error smaller than 1%.

The dynamic viscosity measuring, derived from the capillary flow, is made in real time and under real experimental conditions, in terms of local temperature, density, contact angle and surface tension.

For all these reasons, in the chip according to the invention, the microchannel is the active part, as interactions of oils with the inner walls drive the flow of the fluid (no external power supply is necessary for pumping) by capillarity action. The study of capillary dynamics is the means for extracting the dynamic viscosity values of neat oils and components separated in mixtures.

On the basis of a comparison with the systems of the prior art, in particular patent CN204462012U, it is apparent that the integrated circuit according to the invention is more cost-effective (no optical assembly to be aligned, no external power supply for pumping the liquid), it is disposable (only the set-up is permanent, the channel is replaced) and therefore there are fewer problems related to cross-contamination. Furthermore, the use of one single chip prevents the small quantity of solvent used for the rinsing from modifying the chemical-physical characteristics of the sample. Therefore, the fact that assessment is based on absolute values and not on a measuring with a reference sample (that is neat olive oil) makes it less vulnerable to variability than the reference sample (which can degrade over time). The dynamic viscosity, as well as the refraction index, are in fact physical magnitudes influenced by the structural characteristics of the material at the real measuring conditions. Furthermore, as the system according to the invention is able to determine oils inside the mixture as their viscosity is calculated, the device according to the known art detects a contamination of the reference sample (olive oil) without identifying it.

Due to its capacity to act as viscosity gradient chromatography column, the device of the invention is able to determine oils in the mixture while the device in the patent only detects a contamination of the reference sample without identifying the latter. In the above, preferred embodiments were described and some variants of the present invention were suggested, however it should be understood that experts in the field shall make modification and changes within the scope of protection, as defined in the appended claims.

**Claims**

1. A method for determining the dynamic viscosity of a fluid, in particular oils, comprising the following steps:

   A. providing at least one microchannel having hydraulic radius smaller than 1 mm;
   B. functionalizing the inner surface of said at least a microchannel with a coating repelling said fluid, i.e. such as not to allow the adsorption of the fluid;
   C. carrying out a measurement of the surface tension $\gamma$ of the fluid by a "pendant drop" measurement, i.e. drop hanging from a needle;
   D. carrying out a measurement of the contact angle $\theta$ of a drop of said fluid deposited on a flat surface of the same material as the inner surface of the microchannel functionalized as in step B;
   E. flowing said fluid in the microchannel in a capillary dynamic regime, the fluid having a flow front advancing along the microchannel;
   F. during the preceding step, recording a displacement coordinate z(t) of the flow front over time t, by means of optical microscope interfaced with a camera; and

G. calculating dynamic viscosity $\eta$ of said fluid on the basis of the displacement coordinate of step F, of the contact angle $\theta$ and of the surface tension $\gamma$ of step C.

2. The method according to claim 1, wherein in step A the microchannel has height a and width b, and in step G a capillary dynamics law of Washburn type is used:

$$z(t)= \{(R_H^2 \, \gamma/4\eta)[(2 \, \cos\theta/a)+ (2 \, \cos\theta/b)]\}^{1/2} \, t^{1/2}$$

   wherein $R_H$ is the hydraulic radius equal to (b*a)/(b+2a).

3. The method according to claim 1 or 2, wherein said at least one microchannel is made of Polydimethylsiloxane (PDMS).

4. The method according to any one of claims 1 to 4, wherein the hydraulic radius is smaller than 0.5 micron.

5. The method according to claim 4, wherein the hydraulic radius is smaller than 0.3 micron.

6. The method according to any one of claims 1 to 5, wherein said repellent coating is a fluoropolymer solution (F10).

7. A viscosimeter for determining the dynamic viscosity of a fluid, in particular oils, comprising:

   - at least one microchannel with:

      • hydraulic radius smaller than 1 mm;
      • internal surface functionalized with a coating repelling said fluid, i.e. such as not to allow the adsorption of the fluid;

   - an optical microscope interfaced with a camera and a software;
   wherein said microscope, said camera and said software are configured to:

      ◦ measuring a contact angle $\theta$ of a drop of a flat surface of the same material as said inner functionalized surface; and
      ◦ measuring a surface tension $\gamma$ from a fluid drop hanging from a needle;
      ◦ measuring over time a flow front of the fluid when it advances along the microchannel, recording a correspondent displacement coordinate z(t) of the flow front over time t; and
      ◦ calculating the dynamic viscosity $\eta$ of said fluid on the basis of the displacement coordinate, of the contact angle and of the surface tension.

8. The viscosimeter according to claim 7, wherein said at least one microchannel is made of Polydimethylsiloxane (PDMS).

9. The viscosimeter according to claim 7 or 8, wherein said repellent coating is a fluoropolymer solution (F10).

10. The viscosimeter according to one of claims 7 to 9, wherein the microchannel has height a and width b, and the calculation of dynamic viscosity is made using a capillary dynamics law of Washburn type:

$$z(t)= \{(R_H^2 \, \gamma/4\eta)[(2 \, \cos\theta/a)+ (2 \, \cos\theta/b)]\}^{1/2} \, t^{1/2}$$

wherein $R_H$ is the hydraulic radius equal to (b*a)/(b+2a).

**Patentansprüche**

1. Verfahren zum Bestimmen der dynamischen Viskosität einer Flüssigkeit, insbesondere von Ölen, das die folgenden Schritte umfasst:

A. Bereitstellen mindestens eines Mikrokanals, der einen hydraulischen Radius kleiner als 1 mm aufweist;

B. Funktionalisieren der inneren Oberfläche des mindestens einen Mikrokanals mit einer Beschichtung, die die Flüssigkeit abweist, das heißt derart, dass die Adsorption der Flüssigkeit nicht erlaubt wird;

C. Ausführen einer Messung der Oberflächenspannung $\gamma$ der Flüssigkeit durch eine "hängende Tropfen"-Messung, das heißt eines Tropfens, der an einer Nadel hängt;

D. Ausführen einer Messung des Kontaktwinkels $\theta$ eines Tropfens der Flüssigkeit, der auf einer flachen Oberfläche aus dem gleichen Material wie die innere Oberfläche des wie in Stufe B funktionalisierten Mikrokanals abgeschieden wird;

E. Strömen der Flüssigkeit in dem Mikrokanal in einem kapillaren dynamischen System, wobei die Flüssigkeit eine Strömungsfront aufweist, die sich entlang des Mikrokanals fortbewegt;

F. während des vorhergehenden Schritts, Aufzeichnen einer Verlagerungskoordinate z(t) der Strömungsfront über die Zeit t mittels eines optischen Mikroskops, das mit einer Kamera verbunden ist; und

G. Berechnen der dynamischen Viskosität $\eta$ der Flüssigkeit auf der Basis der Verlagerungskoordinate des Schritts F, des Kontaktwinkels $\theta$ und der Oberflächenspannung $\gamma$ des Schritts C.

2. Verfahren nach Anspruch 1, wobei in Schritt A der Mikrokanal eine Höhe a und eine Breite b aufweist, und in Schritt G ein Kapillardynamikgesetz vom Washburn-Typ verwendet wird:

$$z(t) = \{(R_H^2\, \gamma/4\eta)[(2\, \cos\theta/a) + (2\, \cos\theta/b)]\}^{1/2}\, t^{1/2}$$

wobei $R_H$ der hydraulische Radius gleich $(b{*}a)/(b+2a)$ ist.

3. Verfahren nach Anspruch 1 oder 2, wobei der mindestens eine Mikrokanal aus Polydimethylsiloxan (PDMS) hergestellt ist.

4. Verfahren nach einem der Ansprüche 1 bis 4, wobei der hydraulische Radius kleiner als 0,5 Mikrometer ist.

5. Verfahren nach Anspruch 4, wobei der hydraulische Radius kleiner als 0,3 Mikrometer ist.

6. Verfahren nach einem der Ansprüche 1 bis 5, wobei die abweisende Beschichtung eine Fluorpolymerlösung (F10) ist.

7. Viskometer zum Bestimmen der dynamischen Viskosität einer Flüssigkeit, insbesondere von Ölen, das umfasst:

- mindestens einen Mikrokanal mit:

  • hydraulischem Radius kleiner als 1 mm;
  • innerer Oberfläche, die mit einer Beschichtung funktionalisiert ist, die die Flüssigkeit abweist, das heißt derart, dass die Adsorption der Flüssigkeit nicht erlaubt wird;

- ein optisches Mikroskop, das mit einer Kamera und einer Software verbunden ist;
wobei das Mikroskop, die Kamera und die Software konfiguriert sind, um:

  ○ einen Kontaktwinkel $\theta$ eines Tropfens einer flachen Oberfläche des gleichen Materials wie die innere funktionalisierte Oberfläche zu messen; und
  ○ eine Oberflächenspannung $\gamma$ von einem Flüssigkeitstropfen, der an einer Nadel hängt, zu messen;
  ○ eine Strömungsfront der Flüssigkeit über die Zeit, wenn sie sich entlang des Mikrokanals fortbewegt, zu messen, eine entsprechende Verlagerungskoordinate z(t) der Strömungsfront über die Zeit t aufzuzeichnen; und
  ○ die dynamische Viskosität $\eta$ der Flüssigkeit auf der Basis der Verlagerungskoordinate, des Kontaktwinkels und der Oberflächenspannung zu berechnen.

8. Viskometer nach Anspruch 7, wobei der mindestens eine Mikrokanal aus Polydimethylsiloxan (PDMS) hergestellt ist.

9. Viskometer nach Anspruch 7 oder 8, wobei die abweisende Beschichtung eine Fluorpolymerlösung (F10) ist.

10. Viskometer nach einem der Ansprüche 7 bis 9, wobei der Mikrokanal eine Höhe a und eine Breite b aufweist, und die Berechnung der dynamischen Viskosität unter Verwenden eines Kapillardynamikgesetzes vom Washburn-Typ

erfolgt:

$$z(t) = \{(R_H^2 \gamma/4\eta)[(2\cos\theta/a) + (2\cos\theta/b)]\}^{1/2} t^{1/2}$$

wobei $R_H$ der hydraulische Radius gleich (b*a)/(b+2a) ist.

**Revendications**

1. Procédé de détermination de la viscosité dynamique d'un fluide, en particulier des huiles, comprenant les étapes suivantes :

   A. utilisation d'au moins un microcanal de rayon hydraulique inférieur à 1 mm ;
   B. fonctionnalisation de la surface interne dudit au moins un microcanal par un revêtement repoussant ledit fluide, c.-à-d. tel qu'il ne permette pas l'adsorption du fluide ;
   C. mesure de la tension superficielle $\gamma$ du fluide par une mesure de « goutte pendante », c.-à-d. une goutte pendant d'une aiguille ;
   D. mesure de l'angle de contact $\theta$ d'une goutte dudit fluide déposée sur une surface plane du même matériau que la surface interne du microcanal fonctionnalisé comme à l'étape B ;
   E. écoulement dudit fluide dans le microcanal selon un régime dynamique capillaire, un front d'écoulement du fluide avançant le long du microcanal ;
   F. lors de l'étape précédente, enregistrement d'une coordonnée de déplacement z(t) du front d'écoulement au cours du temps t, au moyen d'un microscope optique à dispositif de prise de vues en interface ; et
   G. calcul de la viscosité dynamique $\eta$ dudit fluide à partir de la coordonnée de déplacement de l'étape F, de l'angle de contact $\theta$ et de la tension superficielle $\gamma$ de l'étape C.

2. Procédé selon la revendication 1, dans lequel à l'étape A, le microcanal a une hauteur a et une largeur b, et à l'étape G, une loi de dynamique capillaire de type Washburn est utilisée :

$$z(t) = \{(R_H^2\,\gamma/4\eta)[(2\,\cos\theta/a) + (2\,\cos\theta/b)]\}^{1/2} t^{1/2}$$

dans laquelle $R_H$ désigne le rayon hydraulique égal à (b*a)/(b+2a).

3. Procédé selon la revendication 1 ou 2, dans lequel ledit au moins un microcanal est constitué de polydiméthylsiloxane (PDMS).

4. Procédé selon l'une quelconque des revendications 1 à 4, dans lequel le rayon hydraulique est inférieur à 0,5 $\mu$m.

5. Procédé selon la revendication 4, dans lequel le rayon hydraulique est inférieur à 0,3 $\mu$m.

6. Procédé selon l'une quelconque des revendications 1 à 5, dans lequel ledit revêtement déperlant est une solution de fluoropolymère (F10).

7. Viscosimètre permettant de déterminer la viscosité dynamique d'un fluide, notamment des huiles, comprenant :

   - au moins un microcanal présentant :

      • un rayon hydraulique inférieur à 1 mm ;
      • une surface interne fonctionnalisée par un revêtement repoussant ledit fluide, c.-à-d. telle qu'elle ne permette pas l'adsorption du fluide ;

   - un microscope optique interfacé avec un dispositif de prise de vues et un logiciel ;
   dans lequel ledit microscope, ledit dispositif de prise de vues et ledit logiciel sont configurés :

      ○ pour mesurer un angle de contact $\theta$ d'une goutte d'une surface plane du même matériau que ladite surface interne fonctionnalisée ; et

◦ pour mesurer une tension superficielle γ à partir d'une goutte de fluide suspendue à une aiguille ;

◦ pour mesurer dans le temps un front d'écoulement du fluide lorsqu'il avance le long du microcanal, pour enregistrer une coordonnée de déplacement correspondante z(t) du front d'écoulement dans le temps t ; et

◦ pour calculer la viscosité dynamique η dudit fluide à partir de la coordonnée de déplacement, de l'angle de contact et de la tension superficielle.

8. Viscosimètre selon la revendication 7, dans lequel ledit au moins un microcanal est constitué de polydiméthylsiloxane (PDMS).

9. Viscosimètre selon la revendication 7 ou 8, dans lequel ledit revêtement déperlant est une solution de fluoropolymère (F10).

10. Viscosimètre selon l'une des revendications 7 à 9, dans lequel le microcanal a une hauteur a et une largeur b et où le calcul de viscosité dynamique est effectué à l'aide d'une loi de dynamique capillaire de type Washburn :

$$z(t) = \{(R_H^2 \gamma/4\eta)[(2\cos\Theta/a)+(2\cos\Theta/b)]\}^{1/2}\, t^{1/2}$$

dans laquelle $R_H$ désigne le rayon hydraulique égal à (b*a)/(b+2a).

Fig. 1

Fig. 2

Fig. 3a

Fig. 3b

Fig. 3c

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016305864 A
- CN 204462012 U

**Non-patent literature cited in the description**

- *Eur J. Lipid Sci. Technol.,* 2011, vol. 113, 1019-1025
- *J. Food Eng.,* 2011, vol. 105, 169-179
- *Lab Chip,* 2013, vol. 13, 297-301
- **C. J. TUBO ; G. H. MCKINLEY.** *Mech. Res. Commun.,* 2009, vol. 36, 110-120
- **C. J. PIPE ; G. H. MCKINLEY.** *Mech. Res. Commun.,* 2009, vol. 36, 110-120
- *Microfluid Nanofluid.,* 2012, vol. 13, 399-409
- *Anal. Chem.,* 2005, vol. 77 (2), 591-595
- *Lab Chip,* 2014, vol. 14, 4391-4397
- *Chem. Eur. J.,* 2014, vol. 20, 1-6
- *Appl. Surf. Sci.,* 2012, vol. 258, 8032-8039
- **VIOLA et al.** *J. Fluor. Chem.,* 2007, vol. 128 (10), 1335-1339
- **ARIMA et al.** *Thin Solid Films,* 2012, vol. 520, 2293-2300
- **GAZZERA et al.** *Adv. Mater. Interfaces,* 2015, vol. 2, 1500170
- **L. GAZZERA et al.** *Adv. Mater. Interfaces,* 2015, vol. 2, 1500170
- **S. OZBAY et al.** *Colloid. Surface A,* 2015, vol. 481, 537-546
- **H. WANG et al.** *J Polym Res,* 2016, vol. 23, 137
- **D. GAO et al.** *Prog. Org. Coat.,* 2015, vol. 82, 74-80
- **T. BHARATHIDASAN et al.** *Carbon,* 2015, vol. 84, 207-213
- **Z. PAN et al.** *Appl. Surf. Sci.,* 2015, vol. 324, 612-620
- **LARA GAZZERA ; CLAUDIO CORTI ; LISA PIRRIE ; ARJA PAANANEN ; ALESSANDRO MONFREDINI ; GABRIELLA CAVALLO ; SIMONA BETTINI ; GABRIELE GIANCANE ; LUDOVICO VALLI ; MARKUS B. LINDER.** *Adv. Mater. Interfaces,* 2015, vol. 2, 1500170